# EUROPÄISCHE PATENTSCHRIFT

(11) **EP 0 421 930 B1**
(45) Veröffentlichungstag und Bekanntmachung des Hinweises auf die Patenterteilung: **14.09.1994**
(21) Anmeldenummer: 90810738.6
(22) Anmeldetag: 25.09.1990
(51) Int. Cl.: C09B 67/00

(54) **Verbesserung der Filtrierbarkeit von organischen Pigmenten**
Improvement of the filtrability of organic pigments
Amélioration de la filtrabilité de pigments organiques

(30) Priorität: 04.10.1989 CH 3629/89
(43) Veröffentlichungstag der Anmeldung: 10.04.1991
(73) Patentinhaber: CIBA-GEIGY AG, 4002 Basel (CH)
(72) Erfinder: Leimer, Marius, Dr., CH-4125 Riehen (CH); von der Crone, Jost, Dr., CH-1732 Arconciel (CH); Bäbler, Fridolin, Dr., Hoctessin, Delaware 19707 (US); Neuschütz, Heinz, D-7888 Rheinfelden (DE)

(56) Entgegenhaltungen:
- EP-A- 0 101 666
- EP-A- 0 181 545
- FR-A- 2 235 728
- GB-A- 1 299 536
- GB-A- 1 395 700
- WPIL, FILE SUPPLIER, AN=80-72563C [41] Derwent Publications Ltd., London, GB;& JP-A-55-112266 (Mitsubishi Chem. Ind. K.K.) 30-08-1980, *Zusammenfassung

## Beschreibung

Die vorliegende Erfindung betrifft ein Verfahren zur Verbesserung der Filtrierbarkeit von organischen Pigmenten durch Behandlung der Pigmentsuspension mit einem aliphatischen 1,2-Diol.

Die Filtration von Pigmentsuspensionen, insbesondere in Form feiner Partikel, ist oft problematisch. Wenn überhaupt möglich, lassen sich derartige Pigmentsuspensionen mit Hilfe konventioneller Filtrationseinrichtungen, wie Vakuumtrommelfilter, Separatoren oder Filterpressen, grosstechnisch nicht befriedigend aufarbeiten. Lange Filtrations- und Waschzeiten sind notwendig; oft werden aufgrund unvollständigen Auswaschens Produkte ungenügender chemischer Reinheit erhalten. Ferner sind die so isolierten Pigmente in Bezug auf ihre Produkteeigenschaften insbesondere wegen Agglomerierung der Pigmentpartikel oft so beschädigt, dass sie in dieser Form aufgrund ungenügender Dispergierbarkeit und/oder koloristischer Eigenschaften nicht zum direkten Einfärben hochmolekularer organischer Materialien verwendet werden können. Ausserdem lässt die Reproduzierbarkeit bei Verwendung derartiger Filtrationseinrichtungen für die Aufarbeitung feiner Pigmentsuspensionen meistens zu wünschen übrig.

Zur Aufarbeitung verschiedenartiger Stoffsuspensionen in Flüssigkeiten wurde bereits vorgeschlagen, die Membrantrenntechnik anzuwenden, wie es beispielsweise in den Übersichtsreferaten "Farbe und Lack 90, 5/1984, S. 372-374" und "Chem.-Ing.-Tech. 53 (1981), Nr. 4, S. 227-236" und insbesondere im US-Patent 4 810 390 beschrieben ist. Dabei werden zur Trennung des Filtrates (oft Permeat genannt) vom suspendierten Stoff semipermeable Schichten in Form von Membranen eingesetzt, wobei die semipermeable Membran für die Flüssigkeit, wie z.B. Wasser, durchlässig ist, während die darin ungelösten Substanzen von ihr zurückgehalten werden.

Es ist nun gefunden worden, dass durch Behandeln einer wässrigen Pigmentsuspension mit einem kleineren Anteil eines aliphatischen 1,2-Diols, die Pigmente ganz überraschend schneller und leichter filtriert und gewaschen werden können.

Nachbehandlungen von Pigmenten mit 1,2-Diolen sind aus GB-A 1 395 700 und EP-A 101 666 bereits bekannt. In beiden Fällen handelt es sich allerdings um eine Konditionierung von bereits isolierten Pigmenten zur Verbesserung des rheologischen Verhaltens und der Dispergierbarkeit. Zu diesem Zweck werden gemäss der erstgenannten Publikation bereits nach üblichen Methoden überzogene, insbesondere anorganische Pigmentpartikel mit einem 1,2-Diol behandelt. Gemäss der zweitgenannten Publikation werden organische Pigmente unter Verwendung eines 1,2-Diols als Mahlhilfsmittel einer wässrigen Mahlung unterworfen.

Die vorliegende Erfindung betrifft demnach ein Verfahren zur Verbesserung der Filtrierbarkeit von organischen Pigmenten, dadurch gekennzeichnet, dass man einer wässrigen Pigmentsuspension 0,5 bis 15 Gew.%, bezogen auf das Pigment, einer unverzweigten aliphatischen 1,2-Dihydroxyverbindung mit 8 bis 22 C-Atomen zugibt und das Gemisch mindestens 15 Minuten bei einer Temperatur zwischen 20 und 100°C rührt.

Geeignete 1,2-Dihydioxyverbindungen sind beispielsweise Octandiol-(1,2), Nonandiol-(1,2), Decandiol-(1,2), Undecandiol-(1,2), Dodecandiol-(1,2), Tridecandiol-(1,2), Tetradecandiol-(1,2), Pentadecandiol-(1,2), Hexadecandiol-(1,2), Heptadecandiol-(1,2), Octadecandiol-(1,2), Nonadecandiol-(1,2), Eicosandiol-(1,2), Heneicosandiol-(1,2), Docosandiol-(1,2), einzeln oder in Mischungen.

Im erfindungsgemässen Verfahren verwendet man bevorzugt aliphatische 1,2-Dihydroxyverbindungen mit 10 bis 16 C-Atomen. Besonders bevorzugt verwendet man Decandiol-(1,2), Hexadecandiol-(1,2) und insbesondere Dodecandiol-(1,2).

Die 1,2-Dihydroxyverbindungen werden bevorzugt in Mengen von 1 bis 5 Gew.%, bezogen auf das Pigment, eingesetzt.

Organische Pigmente, die nach dem erfindungsgemässen Verfahren behandelt werden können, sind beispielsweise Pigmente der Perylen-, Pyrrolopyrrol-, Perinon-, Chinacridon-, Chinophthalon-, Isoindolinon-, Isoindolin-, Dioxazin-, Anthrachinon-, Thioindigo-, Azo-, Methin- oder Azomethinreihe und deren Salze. Bei den Pigmenten der Methin- oder Azomethinreihe kommen sowohl die metallfreien als auch die Metallkomplexe in Betracht. Es ist ferner auch möglich, Pigmentmischungen einzusetzen. Für die Behandlung nach dem erfindungsgemässen Verfahren besonders geeignet sind die Pigmente der Anthrachinonreihe, insbesondere das 4,4'-Diamin-1,1'-dianthrachinonyl, sowie die Metall- und Ammoniumsalze von Disazo- und insbesondere Monoazopigmenten, wie sie z.B. aus DE-OS 26 16 981, DE-OS 33 18 073, EP-A 73 972 und EP-A 241 413 bekannt sind.

Die Zugabe des Diols erfolgt zweckmässig unmittelbar nach Beendigung der Pigmentsynthese-Reaktion oder nach einer ersten groben Filtration nach dem Aufschlämmen des erhaltenen Presskuchens in Wasser.

Bevorzugt wird die Suspension mit dem Diol 30 Minuten bis 4 Stunden bei einer Temperatur zwischen 50 und 100°C gerührt.

Wenn auch in der Regel die Pigmentsuspension neutral ist, so kann es in gewissen Fällen von Vorteil sein, den pH-Wert der Pigmentsuspension in den sauren oder alkalischen Bereich zu verschieben.

In der Regel wird das erfindungsgemässe Verfahren in Abwesenheit von organischen Lösungsmitteln durchgeführt. Geringe Mengen davon können jedoch geduldet werden, soweit sie das Verfahren nicht beeinträchtigen.

Die Aufarbeitung kann auf bekannte Art durch Abfiltrieren der Pigmentsuspension, Auswaschen des Filterkuchens und Trocknen erfolgen. Die 1,2-Dihydroxyverbindungen können durch Auswaschen des Filterkuchens mit einem organischen Lösungsmittel, wie z.B. Methanol, wieder entfernt werden. Wenn auch nicht notwendig, so kann es je nach Pigment und dessen Verwendungszweck von Vorteil sein, die 1,2-Dihydroxyverbindungen im Pigment oder Pigmentgemisch zu belassen.

Die 1,2-Dihydroxyverbindungen wirken nämlich ihrerseits als Texturschutzmittel und können eine Reagglomerierung der Pigmentteilchen bei ihrer Weiterverarbeitung verhindern. Jedenfalls wirkt sich die Gegenwart einer 1,2-Dihydroxyverbindung im Pigment oder Pigmentgemisch günstig auf dessen Dispergierbarkeit aus. Zum Trocknen der Pigmente eignen sich die üblichen Apparaturen, wie Vakuum- oder Umlufttrockenschränke, Schaufeltrockner, Wirbelschicht- oder Gefriertrockner oder auch Sprühtrockner.

Verbleibt die 1,2-Dihydroxyverbindung im Pigment oder Pigmentgemisch, so beobachtet man unabhängig von der Menge eine ausgezeichnete Verträglichkeit der 1,2-Dihydroxyverbindung mit dem zu färbenden Substrat. Auch werden die Eigenschaften des pigmentierten Substrates, wie z.B. die Hitze-, Wetter-, Licht- und Migrationsechtheit nicht beeinträchtigt.

Durch das erfindungsgemässe Verfahren wird nicht nur, wie bereits erwähnt, die Filtrierbarkeit und die Auswaschbarkeit der damit erhaltenen Pigmente, sondern auch deren Eignung zur Sprühtrocknung verbessert. Auch die Verflüssigung der Pigmentsuspension, die Rührbarkeit, die pH-Einstellung und die Reproduzierbarkeit der Pigmentqualität werden dadurch begünstigt.

Die erfindungsgemäss erhaltenen Pigmente zeichnen sich ausserdem durch ein ausgezeichnetes rheologisches Verhalten und durch sehr gute Dispergierbarkeit aus. Ihre üblichen Eigenschaften, wie z.B. Farbstärke, Licht-, Wetter-, Hitze- und Migrationsbeständigkeit, werden durch die erfindungsgemässe Behandlung nicht beeinträchtigt. Das gute rheologische Verhalten wirkt sich vor allem bei der Herstellung von Lacken mit hoher Pigmentkonzentration vorteilhaft aus. Bei der Lagerung solcher Lacke tritt keine Veränderung der Viskosität ein. Bei der Einarbeitung in Kunststoffe ist es im allgemeinen wichtig, dass sich die Pigmente leicht, ohne Anwendung zusätzlicher Scherkräfte, dispergieren lassen.

Die erfindungsgemäss erhaltenen Pigmente eignen sich zum Pigmentieren von hochmolekularem organischem Material, z.B. Celluloseäthern und -estern, wie Aethylcellulose, Acetylcellulose, Nitrocellulose, Polyamiden bzw. Polyurethanen oder Polyestern, natürlichen Harzen oder Kunstharzen, insbesondere Harnstoff- und Melamin-Formaldehydharzen, Alkydharzen, Phenoplasten, Polycarbonaten, Polyolefinen, wie Polyäthylen, Polypropylen und Polystyrol, Polyvinylchlorid, Polyacrylnitril, Polyacrylsäureester, Fluorpolymerisate, wie z.B. Polyfluorethylen, Polytrifluorchlorethylen oder Tetrafluorethylen/Hexafluorpropylen-Mischpolymerisat, ferner thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden.

Die nachfolgenden Beispiele dienen zur Erläuterung der Erfindung.

Beispiel 1: 30 g 4,4'-Diamino-1,1'-dianthrachinonyl (C.I. Pigment Rot 177), erhalten durch Desulfonierung von 4,4'-Diamino-1,1'-dianthrachinonyl-3,3'-disulfonsäure in 80 %iger Schwefelsäure bei 135-140°C gemäss Beispiel 1 der DE-OS 1 205 215, werden als feuchter Presskuchen (100-150 g) während etwa 8 Stunden in 185 ml Wasser angeschlämmt. Der pH wird auf 2 eingestellt und das Volumen wird mit Wasser auf 500 ml gebracht. Nach Erwärmen auf 40°C wird eine Suspension von 0,6 g 1,2-Dodecandiol in 60 ml Wasser zugegeben. Zuerst wird unter gutem Rühren auf 65-70°C erwärmt, wobei die viskose Suspension allmählich dünnflüssiger wird, dann wird 2 Stunden bei 96°C gerührt. Danach wird die Suspension mit 400 ml Wasser verdünnt und filtriert. Nach dem Trocknen im Vakuum bei 75°C oder nach Sprühtrocknung erhält man 30 g des Pigments der Formel

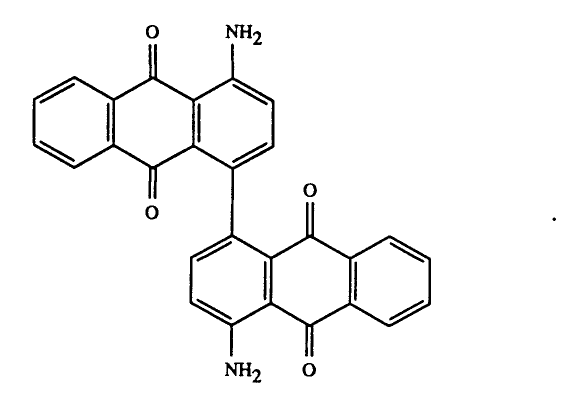

Im Vergleich zum gleichen, aber nicht mit Diol behandelten Pigment, lässt sich das gemäss diesem Beispiel erhaltene Produkt erheblich schneller abfiltrieren und waschen und eignet sich viel besser für die Sprühtrocknung. In Lacken zeigt es ein ausgezeichnetes rheologisches Verhalten bei hoher Transparenz der Ausfärbungen.

Verwendet man in diesem Beispiel anstelle von 1,2 g 1,2-Dodecandiol die gleiche Menge der folgenden Diole:
1,2-Octandiol,
1,2-Tetradecandiol,
1,2-Hexadecandiol,
so erhält man Pigmente, die sich im Vergleich zum gleichen, aber nicht mit Diol behandelten Pigment, viel schneller abfiltrieren und besser waschen lassen. Zudem ist auch die Dispergierbarkeit in Kunststoffen im Vergleich zum unbehandelten Pigment verbessert.

Beispiel 2: 13 g 93 %ige 2-Amino-4,5-dichlorbenzolsulfonsäure werden in 90 ml entionisiertem Wasser und 5,7 ml 25 %iger Ammoniaklösung gelöst. Die klare rotstichig-violette Lösung wird mit 27,5 ml 23,5 %iger Salzsäure versetzt. Die entstehende weisse, dicke Suspension wird auf 5°C abgekühlt und innerhalb von 5 Minuten mit 12,5 ml 4N Natriumnitritlösung versetzt. Zur leicht beigen erhaltenen Suspension tropft man innerhalb von 5 Minuten 15,5 g 90 %iges 1-(3-Sulfophenyl)-3-methyl-5-pyrazolon als feine Suspension in 100 ml entionisiertem Wasser zu. Der pH-Wert der erhaltenen blassgelben Suspension wird mit 15,5 ml 25 %iger Ammoniaklösung auf 6,5 gestellt. Die nun orange Suspension wird während 3 Stunden gerührt. Die Temperatur der Suspension steigt von 5°C auf 22°C. Nach beendigter Kupplung erwärmt man diese Suspension auf 80°C, gibt 1,2 g 1,2-Dodecandiol (als Suspension in 120 ml Wasser) hinzu und rührt 2 Stunden bei 80°C weiter. Danach wird bei 50°C filtriert, mit wenig Wasser gewaschen und im Vakuum bei 60°C getrocknet. Man erhält 26,4 g eines orangen Pigments der Formel 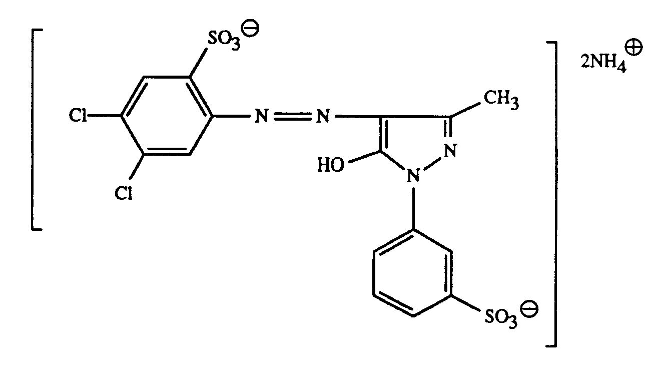
in Pulverform.

Im Vergleich zum gleichen, aber nicht mit Diol behandelten Pigment, lässt sich das gemäss diesem Beispiel erhaltene Produkt viel schneller abfiltrieren. Zudem lässt sich das im Nutschgut verbleibende Ammoniumchlorid vollständiger auswaschen. Auch die Dispergierbarkeit in Kunststoffen ist im Vergleich zum unbehandelten Pigment verbessert.

## Patentansprüche

1. Verfahren zur Verbesserung der Filtrierbarkeit von organischen Pigmenten, dadurch gekennzeichnet, dass man einer wässrigen Pigmentsuspension 0,5 bis 15 Gew.%, bezogen auf das Pigment, einer unverzweigten aliphatischen 1,2-Dihydroxyverbindung mit 8 bis 22 C-Atomen zugibt und das Gemisch mindestens 15 Minuten bei einer Temperatur zwischen 20 und 100°C rührt.

2. Verfahren gemäss Anspruch 1, dadurch gekennzeichnet, dass man eine 1,2-Dihydroxyverbindung mit 10 bis 16 C-Atomen verwendet.

3. Verfahren gemäss Anspruch 1, dadurch gekennzeichnet, dass man die 1,2-Dihydroxyverbindung in Mengen von 1 bis 5 Gew.%, bezogen auf das Pigment, einsetzt.

4. Verfahren gemäss Anspruch 1, dadurch gekennzeichnet, dass man die wässrige Pigmentsuspension mit der 1,2-Dihydroxyverbindung 30 Minuten bis 4 Stunden bei einer Temperatur zwischen 50 und 100°C rührt.

5. Verfahren gemäss Anspruch 1, dadurch gekennzeichnet, dass das organische Pigment ein Pigment aus der Perylen-, Pyrrolopyrrol, Perinon-, Chinacridon-, Chinophthalon-, Isoindolinon-, Isoindolin-, Dioxazin-, Anthrachinon-, Thioindigo-, Azo-, Methin- oder Azomethinreihe oder eines seiner Salze ist.

6. Verfahren gemäss Anspruch 1, dadurch gekennzeichnet, dass das organische Pigment ein Pigment aus der Anthrachinonreihe oder ein Metall- oder Ammoniumsalz eines Disazo- oder Monoazopigments ist.

7. Verfahren gemäss Anspruch 1, dadurch gekennzeichnet, dass das organische Pigment 4,4'-Diamino-1,1'-dianthrachinonyl ist.

8. Verfahren gemäss Anspruch 7, dadurch gekennzeichnet, dass man als Dihydroxyverbindung 1,2-Dodecandiol verwendet.

## Claims

1. A process for enhancing the filterability of organic pigments, which comprises adding to an aqueous pigment suspension 0.5 to 15 % by weight, based on the pigment, of an unbranched aliphatic 1,2-dihydroxy compound containing 8 to 22 carbon atoms, and stirring the mixture for at least 15 minutes at a temperature of between 20 and 100°C.

2. A process according to claim 1, which comprises using a 1,2-dihydroxy compound containing 10 to 16 carbon atoms.

3. A process according to claim 1, wherein the 1,2-dihydroxy compound is used in an amount of 1 to 5 % by weight, based on the pigment.

4. A process according to claim 1, wherein the aqueous pigment suspension is stirred with the 1,2-dihydroxy compound for 30 minutes to 4 hours at a temperature of between 50 and 100°C.

5. A process according to claim 1, wherein the organic pigment is a pigment of the perylene, pyrrolopyrrole, perinone, quinacridone, quinophthalone, isoindolinone, isoindoline, dioxazine, anthraquinone, thioindigo, azo, methine or azomethine series or a salt thereof.

6. A process according to claim 1, wherein the organic pigment is a pigment of the anthraquinone series or is a metal salt or ammonium salt of a disazo or monoazo pigment.

7. A process according to claim 1, wherein the organic pigment is 4,4'-diamino-1,1'-bianthraquinonyl.

8. A process according to claim 7, wherein the dihydroxy compound used is 1,2-dodecanediol.

## Revendications

1. Procédé pour l'amélioration de la filtrabilité des pigments organiques caractérisé en ce qu'on ajoute à une suspension pigmentaire aqueuse 0,5 à 15 % en poids par rapport au pigment, d'un composé 1,2-dihydroxy aliphatique non ramifié, comportant de 8 à 22 atomes de carbone, et on agite le mélange pendant au moins 15 minutes à une température comprise entre 20 et 100 °C.

2. Procédé selon la revendication 1, caractérisé en ce qu'on utilise un composé 1,2-dihydroxy comportant de 10 a 16 atomes de carbone.

3. Procédé selon la revendication 1, caractérisé en ce qu'on utilise le composé 1,2-dihydroxy en quantités de 1 à 5 % en poids, par rapport au pigment.

4. Procédé selon la revendication 1, caractérisé en ce qu'on agite la suspension pigmentaire aqueuse avec le composé 1,2-dihydroxy pendant une durée de 30 minutes à 4 heures, à une température comprise entre 50 et 100 °C.

5. Procédé selon la revendication 1, caractérisé en ce que le pigment organique est un pigment de la série des pérylène, pyrrolopyrrole, périnone, quinacridone, quinophtalone, isoindolinone, isoindoline, dioxazine, anthraquinone, thioindigo, azo, méthine ou azométhine ou d'un de leurs sels.

6. Procédé selon la revendication 1, caractérisé en ce que le pigment organique est un pigment de la série de l'anthraquinone ou un sel de métal ou d'ammonium d'un pigment disazoïque ou monoazoïque.

7. Procédé selon la revendication 1, caractérisé en ce que le pigment organique est le 4,4'-diamino-1,1'-dianthraquinonyle.

8. Procédé selon la revendication 7, caractérisé en ce qu'on utilise le 1,2-dodécane-diol en tant que composé dihydroxy.
